(19) **Europäisches Patentamt**

**European Patent Office**

**Office européen des brevets**

(11) **EP 1 479 157 B1**

(12) **EUROPÄISCHE PATENTSCHRIFT**

(45) Veröffentlichungstag und Bekanntmachung des Hinweises auf die Patenterteilung:
**06.12.2006 Patentblatt 2006/49**

(51) Int Cl.:
*H02P 6/12* *(2006.01)*    *H02P 6/16* *(2006.01)*
*H02P 21/00* *(2006.01)*

(21) Anmeldenummer: **03739438.4**

(86) Internationale Anmeldenummer:
**PCT/EP2003/000302**

(22) Anmeldetag: **15.01.2003**

(87) Internationale Veröffentlichungsnummer:
**WO 2003/069768 (21.08.2003 Gazette 2003/34)**

(54) **VERFAHREN ZUR FEHLERERKENNUNG FÜR ELEKTROMOTOREN**

METHOD FOR THE DETECTION OF ABNORMALITIES OF ELECTRIC MOTORS

PROCEDE DE RECONNAISSANCE D'ERREURS POUR MOTEURS ELECTRIQUES

(84) Benannte Vertragsstaaten:
**DE FR IT**

(30) Priorität: **13.02.2002 DE 10206099**
**23.11.2002 DE 10254752**

(43) Veröffentlichungstag der Anmeldung:
**24.11.2004 Patentblatt 2004/48**

(73) Patentinhaber: **Continental Teves AG & Co. oHG**
**60488 Frankfurt am Main (DE)**

(72) Erfinder: **FEICK, Stefan**
**67292 Kirchhe imbolanden (DE)**

(56) Entgegenhaltungen:
**EP-A- 0 660 503**    **EP-A- 0 739 088**
**WO-A-01/20343**    **DE-A- 4 437 793**
**DE-A- 19 709 296**    **US-A- 5 389 825**
**US-A- 5 729 113**    **US-A- 6 112 156**

Printed by Jouve, 75001 PARIS (FR)

**Beschreibung**

Die Erfindung betrifft ein Verfahren zur Fehlererkennung eines bürstenlosen Elektromotors. Ein solches Verfahren ist aus der US 6 112 156 bekannt geworden.

Bürstenlose Elektromotoren bzw. elektronisch kommutierte Elektromotoren gewinnen zunehmend an Bedeutung. Sie ersetzen insbesondere bürstenbehaftete Elektromotoren in vielen technische Anwendungen. Die Vorteile gegenüber bürstenbehafteten Motoren liegen vor allem im geringen Wartungsaufwand durch Wegfall der Verschleiß unterworfenen Kommutatorbürsten und des prinzipiell höheren Wirkungsgrades durch Wegfall der durch die Bürstenübergangswiderstände hervorgerufenen Kommtatorverluste. Darüber hinaus lassen sich in Verbindung mit "intelligenten" elektronischen Kommutierungseinrichtungen Funktionen realisieren, die mit bürstenbehafteten Motoren nicht möglich oder nur mit einem erheblichen mechanischen Mehraufwand zu erreichen sind. Hierzu zählen der Betrieb im Bereich schwacher Felder oder Feldschwächemodus die Realisierung einer sehr niedrigen Welligkeit des Antriebsmoments.

Da bei bürstenlosen Elektromotoren die Funktionen mechanischer, inherent weitgehend sicherer und zuverlässiger Komponenten, in diesem Fall die Kommutatorbürsten eines Kommutatormotors, durch mechatronische Baugruppen ersetzt werden, ist durch geeignete Maßnahmen die Ausfallsicherheit sicherzustellen. Bedingt durch die relativ hohe Komplexität der Kommutierungselektronik bürstenloser Motoren ergeben sich auch relativ viele Fehlermöglichkeiten.

Insbesondere für sicherheitskritische Anwendungen elektronisch kommutierter Elektromotoren ist eine sichere Fehlererkennung notwendig.

Aufgabe der Erfindung ist es, ein Verfahren anzugeben, das eine Fehlererkennung bürstenloser Elektromotoren ermöglicht.

Diese Aufgabe wird mit den Merkmalen des unabhängigen Anspruchs 1 gelöst.

Abhängige Ansprüche sind auf bevorzugte Ausführungsformen der Erfindung gerichtet.

Das erfindungsgemäße Verfahren ist in Anspruch 1 definiert.

Die Erfindung sieht demnach vor, den Elektromotor inklusive der Kommutierungselektronik im Sinne eines Über-Alles-Tests zu überwachen. Es findet keine Teilkomponentenüberwachung, wie z.B. eine Reglerüberwachung und/oder Endstufenüberwachung statt, sondern das System des Elektromotors wird als Ganzes überwacht.

Daher werden vorteilhaft eine erste Klasse von Fehlern, die zu einer unerwünschten Motorbewegung führen können, eine zweite Klasse von Fehlern, die ein elektronisches Festklemmen des Rotors bewirken, so dass eine Drehbewegung nicht mehr möglich oder stark beeinträchtigt ist, und eine dritte Klasse von Fehlern, in deren Folge kein Drehmoment durch den Motor mehr aufgebaut werden kann, erkannt.

Das Verfahren wird vorzugsweise zur Fehlererkennung von elektronisch kommutierten, dreiphasigen, permanenterregten Synchronmotoren SM eingesetzt. Diese bestehen aus den Hauptbaugruppen Ständer (Stator) mit einer Ständerwicklung und Läufer (Rotor) und weisen eine Regeleinheit, insbesondere einen Transistorwechselrichter TWR, auf, der eine geeignete Bestromung der Ständerwicklung ermittelt und über Leistungstreiber einregelt.

Vorzugsweise ist vorgesehen, dass die zweite Schätz-Motorkenngröße auf Grundlage eines Modells geschätzt wird.

Vorzugsweise ist vorgesehen, dass ein Motordrehmoment bildender Schätz-Strom oder eine davon abgeleitete Größe als zweite Schätz-Motorkenngröße geschätzt wird und mit dem Motordrehmoment bildenden Soll-Strom oder eine davon abgeleitete Größe als zweite Motorkenngröße verglichen wird.

Vorzugsweise ist vorgesehen, dass der Motordrehmoment bildende Schätz-Strom oder die davon abgeleitete Größe auf Grundlage von mindestens einem Phasen-Motorstrom, vorzugsweise 3 Phasen-Motorströmen, und der Rotorlage oder Phasenlage des Elektromotors abgeschätzt wird.

Es wird somit indirekt das Soll-Drehmoment über einen drehmomentbildenden Strom q_soll vorgeben. Der rehmomentbildenden Strom q_soll ist -Sättigungseffekte vernachlässigt- im stationären Zustand direkt proportional zum Drehmoment T. Eine Ermittlung des erforderlichen Bestromungsmusters auf Basis eines vorgegebenen iq-sollWerts kann dabei durch statororientierte oder polradorientierte Stromregelung erfolgen.

Vorzugsweise ist vorgesehen, dass die Rotorlage oder Phasenlage relativ zu dem Stator des Elektromotors bestimmt wird, in dem die jeweilige tatsächliche Phasenlagenänderung des Rotors relativ zum Stator gemessen wird. Daraus kann die absolute Phasenlage ermittelt werden.

Die genaue Winkelposition bzw. Phasenlage des Rotors ist durch eine absolute Positionsmessung zu ermitteln. Das Absolutmeßsystem ist z.B. auf einer Welle , auf welche der Rotor sitzt, angebracht. Es gibt zu jedem Zeitpunkt die genaue Winkellage des Rotors zum Stator an. Als Absolutmeßsystem können beispielsweise sogenannte Resolver, wie Induktionsmesser oder drehbare Transformatoren, oder Hall-Sensoren, eingesetzt werden.

Aus der genauen Winkelposition bzw. Phasenlage des Rotors relativ zum Stator ist insbesondere mit Kenntnis der Phasenströme das Drehmoment auf den Rotor ermittelbar.

Vorzugsweise ist vorgesehen, dass die Phasenströme auf Basis von Strangspannungen unter Berücksichtigung von induzierten, drehzahlproportionalen Gegenspannungen geschätzt werden.

Vorzugsweise ist vorgesehen, dass die Temperatur des Elektromotors und/oder der Wicklungen des Elektromotors gemessen und bei der Schätzung der Schätz-Ströme mitberücksichtigt wird.

Das Verfahren nach der Erfindung wird insbesondere für bürstenlose Elektromotoren im Kraftfahrzeugbereich für Lenkungen, wie bei Steer-by-Wire-Systemen, oder elektrischen Lenkungsunterstützungssystemen, oder für Bremssysteme, wie Brake-by-Wire-Systeme, eingesetzt.

Durch das erfindungsgemäße Verfahren können Fehler, die zu einer nicht erwünschten Bewegung des Aktors des Steer-by-Wire-Systems oder Brake-by-Wire-Systems (erste Fehlerklasse), zu einem elektronischen Festklemmen des Rotors des Motors (zweite Fehlerklasse) oder Fehler, in deren Folge kein Drehmoment mehr aufgebaut werden kann (dritte Fehlerklasse).

Für sicherheitskritische Steer-by-Wire-Systems oder Brake-by-Wire-Systems ist der den Aktuator antreibende Elektromotor vorzugsweise redundant ausgeführt. Nach einem erkannten Fehler werden Funktion des fehlerbehafteten Elektromotors dann durch die redundanten Systeme gewährleistet.

Die Erfindung wird in der nachfolgenden Beschreibung unter Bezugnahme auf die Abbildungen (Fig. 1 bis Fig.3) beispielhaft näher erläutert.

Es zeigen:

Fig.1 schematisch ein Diagramm des erfindungsgemäßen Verfahrens,

Fig.2 eine Ausschnitt des erfindungsgemäßen Verfahrens bezüglich der Fehlerentscheidung, und

Fig.3 schematisch eine Variante des erfindungsgemäßen Verfahrens mit einer Überwachung auf der Basis von Phasenspannungen des Elektromotors.

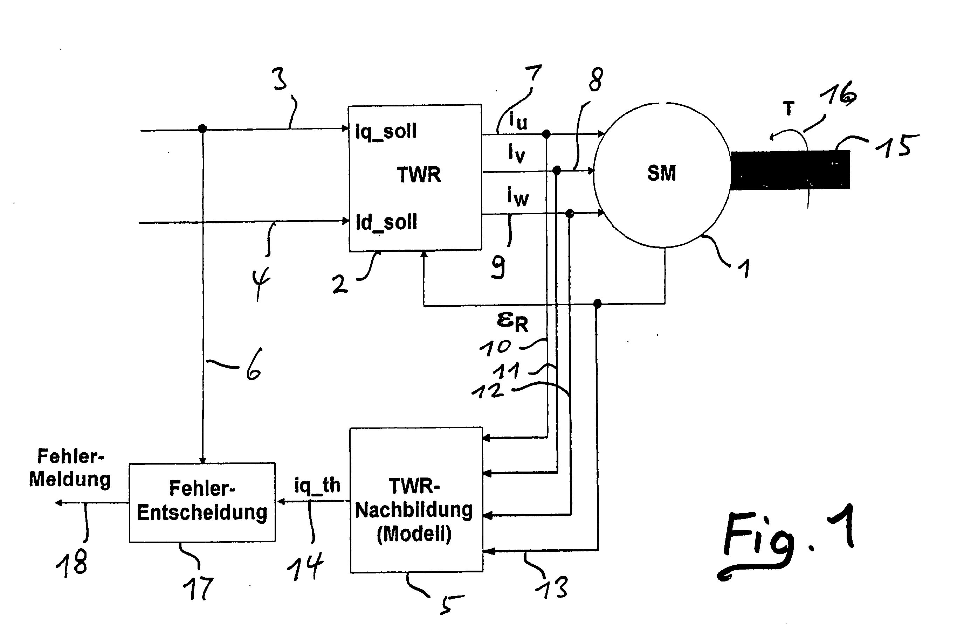

Das in Fig.1 dargestellte Diagramm zeigt das erfindungsgemäße Verfahren der Fehlererkennung am Beispiel elektronisch kommutierten, dreiphasigen, permanenterregten Synchronmotors SM 1. Der Synchronmotors 1 weist einen Transistorwechselrichter TWR 2, auf, der eine geeignete Bestromung der Ständerwicklung ermittelt und über Leistungstreiber die Motorphasenströme $i_u$ 7, $i_v$ 8, $i_w$ 9 einregelt.

Die Vorgabe eines Soll-Drehmoments erfolgt indirekt über die Vorgabe eines drehmomentbildenden Stromes iq_soll 3 und eines feldschwächenden Stroms id_soll 4.

Nach der Erfindung wird der Motor 1 inklusive des Transistorwechselrichters 2 insgesamt überwacht.

Einer Überwachungseinheit 5 werden hierzu der angeforderte Sollwert des drehmomentbildenden Stromes iq_soll 6, Informationen über die Motorphasenströme $i_u$ 10, $i_v$ 11, $i_w$ 12 übermittelt.

Mittels der Überwachungseinheit 5,17 wird auf Grundlage der Motorphasenströme $i_u$ 10, $i_v$ 11, $i_w$ 12 und eines ermittelten, mechanischen Rotorlagewinkels $\varepsilon_R$ 13 ein Schätzwert für den drehmomentbildenden Strom iq_th 14 ermittelt. Dies erfolgt vorzugsweise mittels einer modellbasierten Nachbildung des Transistorwechselrichters 2.

Der geschätzte Wert gibt indirekt auch das theoretisch an einer Motorwelle bzw. Antriebswelle 15 anliegende Drehmoment 16 an.

Der geschätzte Wert iq_th wird unter Berücksichtigung der Dynamik des Stromregelkreises mittels einer Fehlererkennungseinheit 17 mit dem Sollwert des drehmomentbildenden Stromes iq_soll verglichen. Bei Vorliegen einer signifikanten Abweichung zwischen iq_th und iq_soll wird eine Alarmmeldung ausgegeben 18. Zur Abdeckung von Fehlern in den Statorwicklungen und der Strommess-Sensorik wird zusätzlich noch überprüft, ob die Stromsumme des in Sternschaltung betriebenen Motors null ergibt:

$$i_u + i_v + i_w = 0$$

Die Berücksichtigung der Dynamik der Motorstromregelung kann in klassischer Weise durch Beobachterstrukturen oder Paritätsmodelle geschehen.

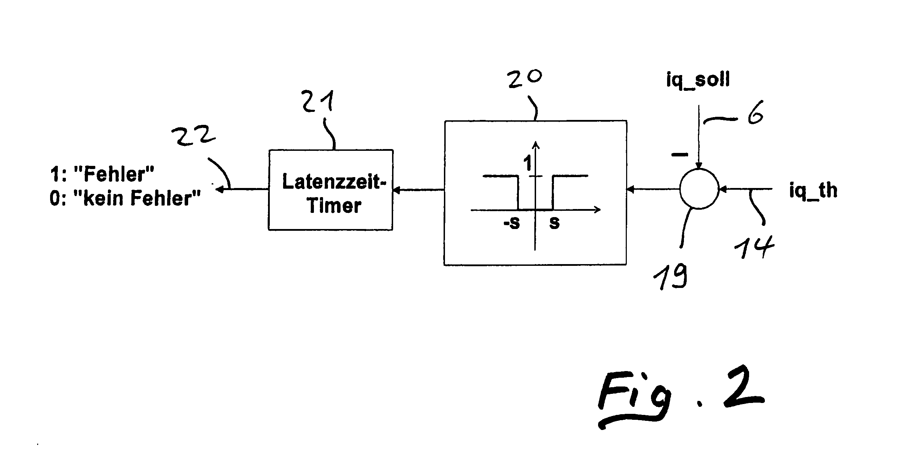

Für bestimmte Anwendungsfälle wird diese nur durch Hinzufügen einer Latenzzeit vor einer Alarmmeldung berücksichtigt. Dies ist in der Fig.2 dargestellt.

Fig.2 zeigt eine Ausführung einer Entscheidungsstruktur zum Erkennen eines Fehlers 17. Aus den beiden Eingangsgrößen iq_soll 6 und iq_th 14 wird die Differenz gebildet 19. Der Betrag der Differenz wird mit einem Schwellwert s verglichen 20. Der Schwellwert kann auch nach weiteren Größen veränderbar sein (adaptiver Schwellwert). Bei blockkommutierten Motoren werden gegenüber sinuskommutierten Motoren höhere Schwellwerte festgelegt. Wird im Schritt 20 eine signifikante Abweichung zwischen dem Betrag der Differenz und dem Schwellwert erkannt, dann wird ein Timer 21 gestartet. Bei Verschwinden der signifikanten Abweichungen wird der Timer 21 wieder bis auf den Wert Null dekrementiert. Bei Überschreiten eines vorgegebenen Zählerstandes wird ausgegeben 22.

Durch dieses Verfahren kann eine möglichst schnelle Fehlererkennung von "schwerwiegenden" Fehlern realisiert werden. Der genaue Fehlerort und die Ursache ist für diese Anwendungen weniger entscheidend. Damit ist das Verfahren der Erfindung zunächst besonders für eine schnelle Fehlererkennung der zuvor umschriebenen drei Fehlerklassen geeignet, wobei nur deren Auftreten angezeigt wird. Erweiterungen, die darüber hinaus auch Aussagen über den Fehlerort und die Fehlerursache erlauben, sind aber denkbar und können in das Verfahren integriert werden.

Der betroffene Aktuator, z. B. der die Antriebswelle 15 antreibende Motor 1, wird bei erkanntem Fehler in Form einer "kollektiven" Fehlerbehandlung abgeschaltet (failsilent Verhalten) und redundante Systeme aktiviert.

Eine detaillierte Fehlerdiagnose erfolgt dann im Rahmen einer eingeleiteten Reparatur oder nach der Abschaltung selbsttätig in hierzu geeigneten Betriebszuständen durch entsprechende Algorithmen und Ablaufszenarien.

Der besondere Vorteil der Erfindung ist es, dass durch das Prinzip des Über-Alles-Tests in Verbindung mit der Stromsummenprüfung alle zuvor erwähnten, durch Ausfälle der Regeleinheit 2 bedingten Fehlerklassen (selbsttätige Bewegung, elektrisches Festklemmen, Ausfall des Motors) erkannt werden können, unabhängig davon, wo der ursächliche Fehler lokalisiert ist, z.B. eine fehlerhafte Sollwertübergabe, eine defekte Rotorpositionssensorik oder eine defekte Endstufe zur Ansteuerung des Motors 1.

Ein bürstenloser Motor 1 kann auch von Fehlern beeinträchtigt werden, die zwar eine Abweichung von einer normalen Funktion darstellen, aber die Drehmomenterzeugung des Motors 1 nicht oder nur minimal beeinträchtigen, wie z. B. Fehler die eine Reduzierung eines Verstärkungsfaktors in der Regeleinheit 2 bewirken. Solange durch das Verfahren keine Fehlermeldung erzeugt wird, ist eine Abschaltung des Aktuators 1 nicht erforderlich. Das abgegebene Drehmoment stimmt im wesentlichen mit der Sollwertvorgabe überein. Die Fehler werden in diesen Fällen durch die Regeleinheit 2 ausgeregelt. Diese Fehler werden so durch die "Robustheit" des Regelkreises abgefangen und erfordern keine Gegenmaßnahmen.

Die Dynamik der Fehlererkennung liegt in der Größenordnung der Zeitkonstante der Motorstromregelung und damit in der Regel « 10 ms. Es ist somit schneller als Verfahren, die auf die Auswertung der Motorstrominformation verzichten und statt dessen rein mechanische Aktuatorgrößen, wie Rotorbeschleunigung, Rotorgeschwindigkeit oder Rotorlage, verwenden.

Das Fehlererkennungsverfahren ist weiterhin universell bei elektronisch kommutierten Motoren mit Lagesensorik einsetzbar, unabhängig vom umgesetzten Prinzip der Motorregelung und demnach insbesondere sowohl für polradorientierte, als auch statororientierte Regelung einsetzbar.

Im Gegensatz zu Verfahren, bei denen nur der Richtungssinn des Drehmomentes ausgewertet wird, werden hier als Vorteil auch Fehler erkannt, die eine Verstärkung oder Verringerung des Drehmoments zur Folge haben. So können auch Fehler, die Momentenwelligkeiten am Antriebsmoment hervorrufen, erkannt werden. Dies ist vor allem bei Systemen mit einer taktilen Schnittstelle zum Bediener, z. B. elektrische Servolenksysteme oder Steer-by-Wire-Systeme mit Handmomentensteller, von großer Bedeutung.

Im Gegensatz zu anderen denkbaren Verfahren zur Motorfehlererkennung liefert diese Erfindung durch Schätzung des Motordrehmoments schließlich die wichtige Aussage, ob und wie der Motor seine eigentliche Funktion (Drehmomenterzeugung) noch erfüllt, und ob von einer von evtl. parallel arbeitenden Fehlererkennungsverfahren empfohlenen Abschaltung abgesehen werden kann. Dies erhöht die Verfügbarkeit des Gesamtsystems.

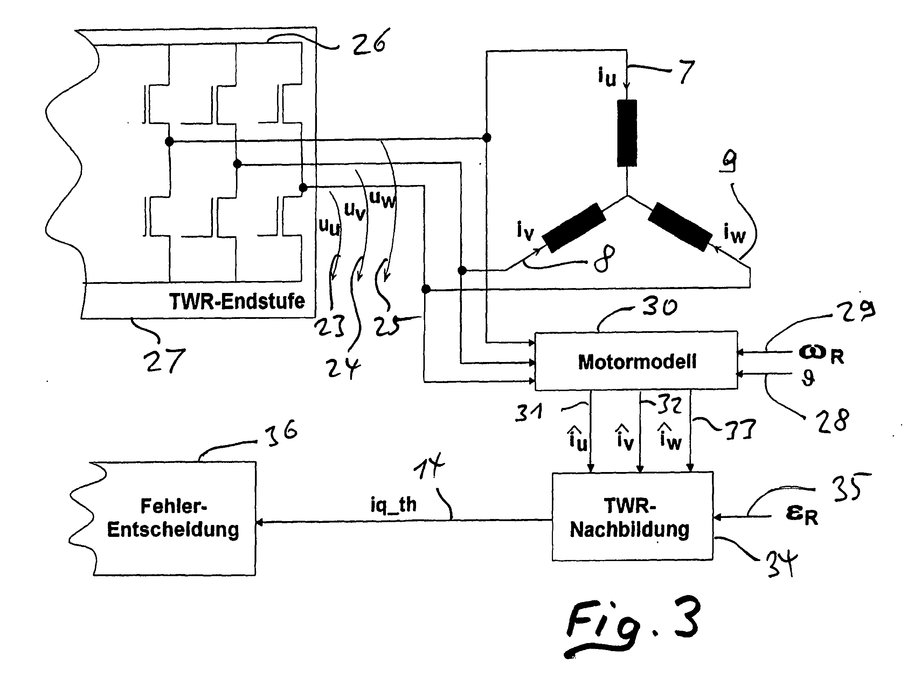

Fig.3 zeigt ein modifiziertes Verfahren. Anstelle der aufwendig zu bestimmenden, durch die Endstufe 26 der Motor-Regeleinheit 2 einsteuerbaren Phasenströme $i_u$ 7, $i_v$ 8, $i_w$ 9 können diese auf Basis der entsprechenden einfach zu bestimmenden Strangspannungen oder Phasenspannungen $u_u$ 23, $u_v$ 24, $u_w$ 25 unter Berücksichtigung der drehzahlproportionalen induzierten Gegenspannung geschätzt und so dem Algorithmus zur Verfügung gestellt werden.

Wegen der Zunahme der Unsicherheiten, z. B. durch eine nichtlineare, temperaturabhängige Motorkonstante, eine temperaturabhängige Wicklungswiderstände und einen hohen Wechselanteil der Strangspannungen, werden höhere Schwellwerte mit dem Ergebnis längerer Fehlererkennungszeiten eingestellt. Darüber hinaus werden die Wicklungs- und/oder Motortemperatur $\vartheta$ 28 und die Rotorgeschwindigkeit $\omega_R$ 29 erfasst und ausgewertet. Aus den Eingangsgrößen werden auf Grundlage eines Motormodells 30 Motorphasenströme $i_{u,\,th}$ 31, $i_{v,\,th}$ 32, $i_{w,\,th}$ 33 geschätzt und als Eingangsgrößen einer Überwachungseinheit 34 zugeführt. Auf Grundlage einer modellbasierten Nachbildung der Regeleinheit 27 wird darin der Schätzwert für den drehmomentbildenden Strom iq_th ermittelt, wobei als weitere Eingangsgröße der ermittelte, mechanische Rotorlagewinkels $\varepsilon_R$ 34 dient. Der Schätzwert für den drehmomentbildenden Strom iq_th wird dann der Fehlererkennung 36 zugeführt.

Ein Vorteil bei diesem modifizierten Verfahren ist neben dem Verzicht auf eine Strommessung, dass zusätzlich zu Fehlern in der Regeleinheit auch Windungsschlüsse im Stator erkannt werden können.

Bei den zuvor beschriebenen Ausführungsbeispielen wird das Modell nicht mit dem Sollwert des drehmomentbildenden Stroms iq_soll versorgt, sondern dieser wird auf Basis der Phasenströme (Fig.1) bzw. Phasenspannungen (Fig.3) geschätzt, was durch dessen hohe Aussagekraft und Interpretierbarkeit vorteilhaft ist.

Es sind ebenfalls Verfahren denkbar, die den Zusammenhang zwischen angefordertem Drehmoment eines bürstenlosen Motors und der Stromaufnahme der Endstufe für eine Fehlererkennung ausnutzen. Eine hohe Stromaufnahme der Endstufe ohne Vorliegen eines entsprechend hohen Wertes für iq_soll ist dann ein Hinweis für einen Fehler. Ein großer Wert für iq_soll ohne entsprechende Stromaufnahme der Endstufe ist ebenfalls als nicht plausibel einzustufen und damit auch ein Hinweis für einen Fehler. Aufgrund von größeren Unsicherheiten werden die Entscheidungsschwellen zur Fehlererkennung nochmals angehoben mit dem Ergebnis, dass leichtere Fehler unerkannt bleiben. Nachteilig ist, dass keine Aussage über den Richtungssinn des Drehmoments möglich ist. Schwere Fehler, die eine Invertierung des Vorzeichens des Sollwertes hervorrufen, bleiben unerkannt. Aufgrund des relativ einfachen Verfahrens wird es für bestimmte Anwendungsfälle als zusätzliches Fehlererkennungsverfahren bei besonders sicherheitsrelevanten Systemen vorgesehen.

**Patentansprüche**

1. Verfahren zur Fehlererkennung eines bürstenlosen Elektromotor (1), wobei mindestens eine erste Motorkenngröße ($i_u$, $i_v$, $i_w$) gemessen oder ermittelt wird und auf der Grundlage der ersten Motorkenngröße ($i_u$, $i_v$, $i_w$) eine zweite Schätz-Motorkenngröße ($i_{q-th}$) geschätzt wird, **dadurch gekennzeichnet, dass** für die Fehlererkennung des Elektromotors (1) inklusive einer Kommutierunaselektronik (2) die zweite Schätz-Motorkenngröße ($i_{q-th}$) mit einem Motordrehmoment bildenden Soll-Strom ($i_{qsoll}$, 6) verglichen wird und nach Maßgabe des Vergleichs ein Fehler im Elektromotor (1) feststellbar ist.

2. Verfahren nach Anspruch 1, **dadurch gekennzeichnet, dass** die zweite Schätz-Motorkenngröße ($i_{q-th}$) auf Grundlage eines Modells (5) geschätzt wird.

3. Verfahren nach Anspruch 1 oder 2, **dadurch gekennzeichnet, dass** ein Motordrehmoment bildender Schätz-Strom ($i_{q-th}$) oder eine davon abgeleitete Größe als zweite Schätz-Motorkenngröße geschätzt wird und mit dem Motordrehmoment bildenden Soll-Strom ($i_{qsoll}$, 6) oder einer davon abgeleiteten Größe als zweite Motorkenngröße verglichen wird.

4. Verfahren nach Anspruch 3, **dadurch gekennzeichnet, dass** der Motordrehmoment bildende Schätz-Strom ($i_{q-th}$) oder die davon abgeleitete Größe auf Grundlage von mindestens einem Phasen-Motorstrom ($i_u$, $i_v$, $i_w$) vorzugsweise 3 Phasen-Motorströmen, und der Rotorlage ($\varepsilon_R$) oder Phasenlage des Elektromotors (1) abgeschätzt wird.

5. Verfahren nach Anspruch 4, **dadurch gekennzeichnet, dass** die absolute Rotorlage ($\varepsilon_R$) oder Phasenlage relativ zu einem Stator des Elektromotors (1) bestimmt wird, in dem die jeweilige tatsächliche Phasenlagenänderung des Rotors relativ zum Stator gemessen wird und daraus die absolute Phasenlage ermittelt wird.

6. Verfahren nach Anspruche 4 oder 5, **dadurch gekennzeichnet, dass** die Phasenströme ($i_u$, $i_v$, $i_w$) auf Basis von Strangspannungen unter Berücksichtigung von induzierten, drehzahlproportionalen Gegenspannungen geschätzt werden.

7. Verfahren nach einem der Ansprüche 3 bis 6, **dadurch gekennzeichnet, dass** die Temperatur $\vartheta$ des Elektromotors (1) und/oder der Wicklungen des Elektromotors gemessen und bei der Schätzung der Schätz-Ströme mitberücksichtigt wird.

8. Verfahren nach Anspruch 1, **dadurch gekennzeichnet, dass** nach Maßgabe eines Vergleichs zwischen angefordertem Drehmoment des bürstenlosen Elektromotors und der Stromaufnahme einer den Elektromotor ansteuernden Endstufe ein Fehler ermittelt wird.

9. Verfahren nach einem oder mehreren der vorhergehenden Ansprüche, **dadurch gekennzeichnet, dass** eine erste Klasse von Fehlern, die zu einer unerwünschten Motorbewegung führt, eine zweite Klasse von Fehlern, die ein elektronisches Festklemmen des Rotors bewirkt, so dass eine Drehbewegung nicht mehr möglich oder stark beeinträchtigt ist, und eine dritte Klasse von Fehlern, in deren Folge kein Drehmoment durch den Motor mehr aufgebaut werden kann, erkannt wird.

**Claims**

1. Method for error detection of a brushless electric motor (1), wherein at least one first motor parameter ($i_u$, $i_v$, $i_w$) is measured or determined, and a second, estimated motor parameter ($i_{q-th}$) is estimated on the basis of the first motor parameter ($i_u$, $i_v$, $i_w$), **characterized in that** for the error detection of the electric motor (1) inclusive commutation electronics (2), the second, estimated motor parameter ($i_{q-th}$) is compared to a nominal current ($i_{qnominal}$, 6) producing a motor torque, and an error in the electric motor (1) can be found out according to the comparison.

2. Method as claimed in claim 1, **characterized in that** the second, estimated motor parameter ($i_{q\_th}$) is estimated on the basis of a model (5).

3. Method as claimed in claim 1 or 2, **characterized in that** an estimated current ($i_{q-th}$) producing a motor torque or a quantity derived therefrom is estimated as a second, estimated motor parameter and compared with the nominal current ($i_{qnominal}$, 6) producing a motor torque or a quantity derived therefrom as a second motor parameter.

4. Method as claimed in claim 3, **characterized in that** the estimated current ($i_{q-th}$) producing the motor torque or the quantity derived therefrom is estimated on the basis of at least one phase motor current ($i_u$, $i_v$, $i_w$), preferably three-phase motor currents, and a rotor position ($\varepsilon_R$) or phase relation of the electric motor (1).

5. Method as claimed in claim 4, **characterized in that** the absolute rotor position ($\varepsilon_R$) or phase relation relative to a stator of the electric motor (1) is defined by measuring the respective actual phase relation variation of the rotor relative to the stator and determining the absolute phase relation therefrom.

6.　Method as claimed in claim 4 or 5, **characterized in that** the phase currents ($i_u$, $i_v$, $i_w$) are estimated on the basis of phase voltages in consideration of induced countervoltages proportional to rotational speed.

7.　Method as claimed in any one of claims 3 to 6, **characterized in that** the temperature ($v_i$) of the electric motor (1) and/or the windings of the electric motor is measured and also taken into consideration in the estimation of the estimated currents.

8.　Method as claimed in claim 1, **characterized in that** an error is detected according to a comparison between the requested torque of the brushless electric motor and the current consumption of an end stage that actuates the electric motor.

9.　Method as claimed in any one or more of the preceding claims, **characterized in that** there is detection of a first class of errors that causes undesirable motion of the motor, a second class of errors that causes electronic clamping of the rotor so that rotation is no longer possible or highly impaired, and a third class of errors that prevents the motor from developing torque as a result.

**Revendications**

1.　Procédé de détection de défauts d'un moteur électrique (1) sans balais, au moins une première grandeur caractéristique ($i_u$, $i_v$, $i_w$) du moteur est mesurée ou déterminée et sur la base de la première grandeur caractéristique ($i_u$, $i_v$, $i_w$) du moteur une seconde grandeur caractéristique estimée ($i_{q\_th}$) est estimée, **caractérisé en ce que** pour la détection de défauts du moteur électrique (1) y compris d'une électronique de commutation (2), la seconde grandeur caractéristique estimée ($i_{q\_th}$) du moteur est comparée à un courant de consigne ($i_{q\_soll}$, 6), formant un couple de rotation du moteur, et un défaut dans le moteur électrique (1) peut être constaté en fonction de la comparaison.

2.　Procédé selon la revendication 1, **caractérisé en ce que** la seconde grandeur caractéristique estimée ($i_{q\_th}$) du moteur est estimée sur la base d'un modèle (5).

3.　Procédé selon la revendication 1 ou 2, **caractérisé en ce qu'**un courant d'estimation ($i_{q\_th}$) formant un couple de rotation du moteur ou une grandeur dérivée de celui-ci est estimé en tant que seconde grandeur caractéristique estimée du moteur et est comparé au courant de consigne ($i_{q\_soll}$, 6) formant le couple de rotation du moteur ou à une grandeur dérivée de celui-ci en tant que seconde grandeur caractéristique du moteur.

4.　Procédé selon la revendication 3, **caractérisé en ce que** le courant d'estimation ($i_{q\_th}$) formant le couple de rotation du moteur ou la grandeur dérivée de celui-ci est estimé sur la base d'au moins un courant de moteur phasé ($i_u$, $i_v$, $i_w$), de préférence de courants de moteurs triphasés, et de la position ($\varepsilon_R$) du rotor ou de la situation des phases du moteur électrique (1).

5.　Procédé selon la revendication 4, **caractérisé en ce que** la position absolue ($\varepsilon_R$) du rotor ou la situation des phases par rapport à un stator du moteur électrique (1) est déterminée, dans laquelle la variation respective effective de la situation des phases du rotor par rapport au stator est mesurée et la situation absolue des phases est déterminée à partir de celle-ci.

6.　Procédé selon la revendication 4 ou 5, **caractérisé en ce que** les courants de phase ($i_u$, $i_v$, $i_w$) sont estimés sur la base de tensions par phase d'enroulement en tenant compte de contre-tensions induites, proportionnelles à la vitesse de rotation.

7.　Procédé selon l'une des revendications 3 à 6, **caractérisé en ce que** la température ($v_i$) du moteur électrique (1) et/ou des enroulements du moteur électrique est mesurée et prise en compte également lors de l'estimation des courants d'estimation.

8.　Procédé selon la revendication 1, **caractérisé en ce qu'**en fonction d'une comparaison entre le couple de rotation exigé du moteur électrique sans balais et la consommation de courant d'un étage final, commandant le moteur électrique, un défaut est déterminé.

9.　Procédé selon une ou plusieurs des revendications précédentes, **caractérisé en ce qu'**une première classe de défauts, qui entraîne un mouvement indésirable du moteur, une deuxième classe de défauts, qui provoque un blocage électronique du rotor, ce qui fait qu'un mouvement de rotation n'est plus possible ou fortement gêné, et une troisième classe de défauts à la suite desquels aucun couple de rotation ne peut plus être fourni par le moteur, sont détectés.

Fig.1

EP 1 479 157 B1

Fig. 2

Fig. 3